# EUROPÄISCHE PATENTSCHRIFT

(11) **EP 1 780 310 B1**
(45) Veröffentlichungstag und Bekanntmachung des Hinweises auf die Patenterteilung: **25.05.2011**
(21) Anmeldenummer: 06020656.2
(22) Anmeldetag: 30.09.2006
(51) Int. Cl.: C23F 14/02, C23F 11/18, C23F 11/08, C23F 11/173, C02F 5/08

(54) **Verfahren zur Korrosionsschutzbehandlung wasserführender Metallsysteme unter Vorkonditionierung des Korrosionsschutzmittels**
Method for corrosion protection of water suppling metallic lines by using corrosion inhibitors
Méthode de protection contre la corrosion de surfaces métalliques utilisées dans les systèmes de transportation d'eau par l'utilisation des inhibiteurs de corrosion

(30) Priorität: 18.10.2005 DE 102005050200
(43) Veröffentlichungstag der Anmeldung: 02.05.2007
(73) Patentinhaber: BK Giulini GmbH, 67065 Ludwigshafen (DE); Lizenzgemeinschaft Wons u.a. vertreten durch Herrn Werner Wons, 51427 Bergisch Gladbach (DE)
(72) Erfinder: Hater, Wolfgang, 41564 Kaarst (DE); Friedrich, Anja, 40625 Düsseldorf (DE); Schmidt, Peter, 51519 Odenthal (DE); Wons, Werner, 51427 Bergisch Gladbach (DE)
(74) Vertreter: Lippert, Stachow & Partner

(56) Entgegenhaltungen:
- EP-A- 0 510 989
- DE-A1- 4 321 883
- DE-A1- 19 755 622
- DE-C1- 3 508 526
- GB-A- 491 237

## Beschreibung

Die Erfindung betrifft ein Verfahren zur Korrosionsschutzbehandlung von wasserführenden Systemen, insbesondere aus niedrig legiertem oder unlegiertem Stahl, aus Kupfer oder Blei. Diese können beispielsweise Trinkwasserleitungen oder Prozess- oder Kühlwasserleitungen darstellen.

Die EP 860 517 beschreibt einleitend: Es ist bekannt, in wasserführenden Metallsystemen zur Verhinderung der Korrosion und der damit verbundenen Beeinträchtigung der Wasserqualität dem Wasser bestimmte chemische Stoffe zuzusetzen. Bei Durchflusssystemen, insbesondere für die Trinkwasserversorgung, kommen dabei nur wenige Stoffe in Frage, weil die Gesundheitsgefährdung der Verbraucher unbedingt und die Belastung des Abwassers soweit wie möglich vermieden werden müssen.

Besonders effizient zur Korrosionsschutzbehandlung trinkwasserführender Metallsysteme sind Kombinationen von Silicaten mit ergänzenden Wirkstoffen. Bei diesen ergänzenden Wirkstoffen kann es sich beispielsweise um Phosphate und/oder Carbonate handeln. Im Falle des Einsatzes von Phosphaten in Verbindung mit Silicaten ist es besonders effizient, eine Kombination von Orthophosphaten mit höher kondensierten Phosphaten zu verwenden. Die EP 102587 beschreibt ein Verfahren zur Korrosionsschutzbehandlung wasserführender Systeme durch Zusätze von Phosphaten und/oder Silicaten, wobei dem Wasser Natrium- oder Kaliumcarbonate oder -hydrogencarbonate in Kombination mit diesen Phosphaten und/oder Silicaten zugegeben werden. Hierzu wird in den Wasserstrom ein Mittel dosiert, welches Trinatriumphosphat, Natriumsilicat und Natriumhydrogencarbonat enthält.

Eine Lösung, die sowohl Silicate als auch die ergänzenden Wirkstoffe enthält, ist nur unter eingeschränkten Konzentrationsbedingungen ausreichend lagerfähig. Bisher bemühte man sich zum einen, einkomponentige Konzentrate zur Verfügung zu stellen, die durch geschickte Auswahl der einzelnen Komponenten auch bei vergleichsweise hohen Konzentrationen noch lagerstabil sind. Eine Alternative hierzu besteht darin, hochkonzentrierte Lösungen von Silicaten einerseits und der ergänzenden Wirkstoffe andererseits herzustellen, die nacheinander oder gleichzeitig dem Wasserstrom des trinkwasserführenden Metallsystems zudosiert werden. Die Wirkstoffe dieser zweikomponentigen Konzentrate kommen also erst dann miteinander in Kontakt, wenn sie im Trinkwasserstrom bereits auf ihre Endkonzentration verdünnt sind. Diese Endkonzentrationen liegen im Bereich einiger mg/l.

Die zur optimalen Ausnutzung des synergistischen Effekts zuzudosierenden Gewichtsmengen Phosphat und Silicat sind nicht konstant, sondern hängen beispielsweise von der Art des Wassers sowie von den Betriebsbedingungen und der Art des gewünschten Korrosionsschutzes ab. So fördert ein hoher Gehalt an Neutralsalzen wie Chloriden und Sulfaten bei geringer Säurekapazität die Korrosion. Eine im stationären Durchflußbetrieb gebildete Deckschicht aus Eisenhydroxiden, die an sich den Korrosionsvorgang verlangsamt, kann sich bei instationärem Betrieb, d. h. bei Sauerstoffmangel, wieder zurückbilden. Andererseits ist nach den gesetzlichen Vorschriften jeder Zusatz zum Trinkwasser auf das notwendige Minimum zu beschränken. Bezüglich aller Durchflusssysteme gilt dies insbesondere für Phosphat, da es über das Abwasser zu einer unerwünschten und schädlichen Überdüngung der Oberflächengewässer führen kann.

Aufgabe der EP 860 517 B1 war es, ein Verfahren zur Korrosionsschutzbehandlung wasserführender Metallsysteme durch Dosierung einer Kombination von Phosphaten und Silicaten in den Wasserstrom anzugeben, mit dem zu jeder Zeit ein optimales Verhältnis von Silicat zu Phosphat bei gleichzeitiger Minimierung der Phosphatmenge eingehalten werden kann. Diese Aufgabe wurde gelöst durch ein Verfahren zur Korrosionsschutzbehandlung trinkwasserführender Metallsysteme durch Dosierung einer Kombination von Phosphaten und Silicaten in den Wasserstrom, dadurch gekennzeichnet, dass Phosphate und Silicate getrennt voneinander zudosiert werden.

Im Falle der einkomponentigen Konzentrate muss man sich bemühen, die Komponenten so zu wählen, dass sie im Konzentrat nicht unkontrolliert miteinander reagieren, beispielsweise dass das Silicat nicht polymerisiert und hierbei entweder ausfällt oder zu einem nicht mehr handhabbaren Gel wird. Diese einschränkende Bedingung stellt sich nicht, wenn man zwei getrennte Konzentrate herstellt und einsetzt. In diesem Fall können aber die Wirkstoffe in den einzelnen Konzentraten erst miteinander wechselwirken, wenn sie auf Anwendungskonzentration verdünnt sind. Nach dem bisherigen Stand der Technik ist es also nicht möglich, die Silicatkomponente unter Einfluss der ergänzenden Wirkstoffe zunächst einer "Vorkonditionierung" oder einer "Reifung" zu unterwerfen, bevor sie auf die Anwendungskonzentration verdünnt wird. Bei einer solchen "Vorkonditionierung" kondensieren die Silicationen zu höhermolekularen Spezies. Äußerlich zeigt sich dies daran, dass die silicathaltige Lösung eintrübt und/oder daran, dass ihre Viskosität zunimmt. Solche durch Vorkonditionierung oder Reifung entstehende höhermolekulare Silicatspezies sind aber im trinkwasserführenden Metallsystem prinzipiell erwünscht, da sie besonders effektiv mit den Korrosionszentren der Metalloberfläche wechselwirken und diese Korrosionszentren blockieren. Die Korrosionsschutzwirkung dieser im Reifeprozess gebildeten höhermolekularen Silicatspezies ist also größer als diejenige solcher Silicatspezies, die nach dem Verdünnen der Konzentrate ohne Vorreifung im trinkwasserführenden Metallsystem entstehen.

Lösungen, in der dieser Vorkonditionierungs- oder Reifungsprozess abläuft, sind jedoch nicht lagerstabil, sondern bilden innerhalb weniger Stunden Niederschläge bzw. Gele. Daher war es bisher nicht möglich, solche vorkonditionierte Silicatspezies in das trinkwasserführende Metallsystem einzubringen. Die vorliegende Erfindung löst dieses Problem.

DE 197 55 622 A1 beschreibt ein stabiles wässriges Konzentrat, enthaltend Silicat- und Phosphationen im Verhältnis 1:2 bis 1:4 mit einem Gesamtphosphatgehalt ≥ 6% und ≥ 1,5% SiO₂ zum Einsatz im Verfahren zum Korrosionsschutz von Trinkwasserleitungen.

DE 43 21 883 A1 offenbart ein stabiles wässriges Konzentrat für dieselbe Verwendung mit mindestens 8 Gew.-% Silicat (als SiO₂) und mindestens 3 Gew.-% Orthophosphat (als PO₄).

Gegenstand der vorliegenden Erfindung ist ein Verfahren zur Korrosionsschutzbehandlung wasserführender Metallsysteme nach Anspruch 1. Die wasserführenden Metallsysteme können beispielsweise Trinkwasserleitungen oder Prozess- oder Kühlwasserleitungen darstellen.

In diesem Verfahren werden also zwei getrennte Konzentrate eingesetzt, wovon das erste die Phosphate und das zweite die Silicate enthält. Hierfür können Lösungen verwendet werden, wie sie im Stand der Technik bekannt sind und beispielsweise in EP 860 517 beschrieben werden. Allerdings werden diese Lösungen nun nicht, wie in dem genannten Dokument beschrieben, getrennt dem wasserführenden System unmittelbar zudosiert und hierdurch direkt auf Anwendungskonzentration verdünnt. Vielmehr werden diese getrennten Lösungen nunmehr - vorzugsweise unter Verdünnen auf eine Konzentration, die höher ist als die Endkonzentration im wasserführenden Metallsystem - zunächst miteinander in Kontakt gebracht. Hierbei tritt der Reifeprozess der Silicatspezies ein, was sich in einer Eintrübung und/oder Viskositätssteigerung in der dritten Lösung zeigt. Dieser Reifeprozess muss jedoch unterbrochen werden, bevor in der dritten Lösung Silicatkristalle ausfallen bzw. sich ein nicht mehr pumpbares Gel bildet.

Als Kriterium für die zweckmäßige Reifedauer kann zum einen der relative Anstieg der Trübung der Lösung oder der relative Anstieg der Viskosität, jeweils verglichen mit Trübung bzw. Viskosität unmittelbar nach dem Vermischen der ersten und der zweiten Lösung, herangezogen werden. Nach diesem Zeitraum wird der Reife- bzw. Vorkonditionierungsprozess dadurch unterbrochen, dass die dritte Lösung in den Hauptwasserstrom des wasserführenden Metallsystems eingespeist und hierdurch auf Endkonzentration verdünnt wird. Die eintretende Verdünnung stoppt den weiteren Reifungsprozess der entstandenen Silicatspezies.

Nimmt man die relative Zunahme der Trübung in der dritten Lösung als Kriterium für die Reifungszeit, so führt man die Reifung für eine solche Zeitdauer durch, dass die Trübung der dritten Lösung im Vergleich zur Trübung unmittelbar nach dem Vereinigen der ersten und der zweiten Lösung um einen Faktor im Bereich von etwa 1,5 bis etwa 50, vorzugsweise von etwa 2 bis etwa 50 zunimmt. Die Trübung ist einfach durch Messung der Lichtabsorption zu bestimmen. Da die Trübungszunahme nicht in absoluten Werten, sondern relativ zur Ausgangstrübung gemessen wird, ist es gleichgültig, welches genaue Verfahren man zur Messung der Trübung heranzieht und bei welcher Lichtwellenlänge diese Messung erfolgt. Es ist lediglich erforderlich, dass alle Messungen der Trübung unter gleichen Bedingungen erfolgen.

Alternativ kann man die Zunahme der Viskosität der dritten Lösung als Kriterium für die Reifezeit wählen. In diesem Fall wählt man die Reifungsdauer so, dass die Viskosität der Lösung relativ zur Viskosität unmittelbar nach dem Vereinigen von erster und zweiter Lösung um einen Faktor im Bereich von etwa 1,5 bis etwa 10, vorzugsweise von etwa 2 bis etwa 10 zunimmt. Da hierbei nur die relative Viskositätszunahme und nicht die absolute Viskosität gemessen werden muss, ist es gleichgültig, nach welcher Methode die Messung der Viskosität erfolgt. Es ist lediglich erforderlich, dass alle Viskositätsmessungen nach der gleichen Methode erfolgen. Am einfachsten wählt man die Methode nach Brookfield.

Sowohl die Zunahme der Trübung als auch die Zunahme der Viskosität in der dritten Lösung zeigen den Reifungsprozess der Silicatspezies an. Dabei laufen diese beiden Prozesse in der Regel nicht zeitlich parallel, sondern zeitlich versetzt ab. Die Zunahme der Trübung und der Viskosität erfolgt in der Regel auch nicht linear mit der Zeit. Vielmehr ändern sich diese Eigenschaften unmittelbar nach dem Vereinigen der ersten und der zweiten Lösung zunächst nur langsam, bis nach einer von den konkreten Umständen abhängigen Latenzzeit eine plötzliche Änderung dieser Größen eintritt. Dies erfolgt jedoch für die Trübung und die Zunahme der Viskosität in der Regel zu unterschiedlichen Zeiten. Daher kann als Reifungszeit auch ein Zeitpunkt gewählt werden, der zwischen dem Anstieg der Trübung und dem Anstieg der Viskosität liegt.

Wie lange diese Vorkonditionierungs- bzw. Reifezeit dauert, hängt von der konkreten Zusammensetzung der ersten und der zweiten Lösung und deren Verdünnungsgrad beim Herstellen der dritten Lösung ab. Die richtige Zeitdauer muss daher in Vorversuchen bestimmt werden. Anhand der genannten Kriterien ist dies jedoch sehr einfach. In der praktischen Anwendung ist es dann nicht mehr erforderlich, dass man die Zunahme der Trübung bzw. den Anstieg der Viskosität laufend misst. Vielmehr muss man lediglich dafür sorgen, dass zwischen der Herstellung der dritten Lösung und deren Einspeisen in den Wasserstrom des wasserführenden Metallsystems diejenige Zeit für die Vorkonditionierung zur Verfügung steht, die man in Vorversuchen nach den genannten Kriterien festgelegt hat. Allenfalls empfiehlt es sich, in größeren Zeitabständen, beispielsweise nach der Anlieferung neuer Konzentrate als erste und zweite wässrige Lösung, in einem Vorversuch zu überprüfen, ob die gewählte Konditionierungszeit noch korrekt ist.

Aus wirtschaftlichen Gründen sollen die erste und die zweite wässrige Lösung möglichst konzentriert sein, damit bei der Anlieferung dieser Konzentrate nicht unnötige Wassermengen transportiert werden. Dies ist beispielsweise bei den in EP 860 517 genannten Lösungen der Fall. Dann empfiehlt es sich, die erste und die zweite Lösung nicht direkt miteinander zur dritten Lösung zu vereinigen, sondern zusätzliches Wasser bei der Zubereitung der dritten Lösung zuzugeben. Im allgemeinen empfiehlt es sich, eine solche Menge Wasser bei der Herstellung der dritten Lösung zu verwenden, dass die Konzentration von Silicat in der dritten Lösung, berechnet als SiO₂, im Bereich von 0,5 bis 7 Gew.-% bezogen auf die dritte Lösung liegt. In diesem Konzentrationsbereich findet der Reifungsprozess der Silicatspezies in einem technisch handhabbaren Zeitraum statt.

In einer bevorzugten Ausführungsform sind die ergänzenden Wirkstoffe in der ersten wässrigen Lösung ausgewählt aus Alkalimetall-Hydroxiden, Alkalimetall-Carbonaten oder -Hydrogencarbonaten, Phosphorsäure, primären, sekundären oder tertiären Alkalimetall-Monophosphaten, -Diphosphaten, -Oligophosphaten oder -Polyphosphaten.

Als Phosphate kommen Orthophosphate, insbesondere Natriumorthophosphat, Kaliumorthophosphat, Oligophosphate wie Natrium- und Kaliumdiphosphat, Natrium- und Kaliumtriphosphat, Polyphosphate wie Natrium- und Kaliumpolyphosphat oder Gemische hiervon, in Betracht. Bevorzugt sind Lösungen, die sowohl Ortho- als auch Oligo- und/oder Polyphosphate enthalten. Letztere können sich zu Orthophosphaten umsetzen und dienen als Orthophosphat-Reservoir für den Schutz werksferner Teile des Metallsystems, insbesondere instationär betriebener Endstränge, wenn das ursprünglich vorhandene Orthophosphat zur Deckschichtbildung in den werksnahen Teilen zum großen Teil aufgebraucht wurde. Bevorzugte Lösungen enthalten 25 bis 75 % des Gesamtphosphates als Orthophosphat bzw. 75 bis 25 % in Form eines oder mehrerer Oligo- oder Polyphosphate, jeweils als Gewichtsanteil am Gesamt-PO₄³⁻ gerechnet.

Vorzugsweise enthält die erste, phosphathaltige Lösung mindestens 3 Gew.-% Orthophosphat, berechnet als PO₄³⁻, und die zweite, silicathaltige Lösung mindestens 8 Gew.-% Silicat, berechnet als SiO₂. Die zweite Lösung kann zusätzlich Carbonat oder Hydrogencarbonat enthalten.

Dabei ist es bevorzugt, dass die erste Lösung mindestens 10 Gew.-%, vorzugsweise mindestens 20 Gew.-% Phosphationen, berechnet als PO₄³⁻, enthält, wobei diese eine Mischung aus Orthophosphat und Oligo- und/oder Polyphosphat darstellen können.

Wie im Stand der Technik für die Verwendung silicathaltiger Lösung zur Trinkwasserbehandlung üblich, ist es auch im Rahmen der vorliegenden Erfindung bevorzugt, dass die zweite, silicathaltige Lösung die Silicationen in Form der Natriumsalze mit einem Molverhältnis von SiO₂ zu Na₂O im Bereich von 1,8 bis 4, vorzugsweise im Bereich von 2 bis 3,5 enthält.

Welche Konzentration die ergänzenden Wirkstoffe wie beispielsweise die Phosphate in der dritten wässrigen Lösung haben sollen, hängt zum einen von der Konzentration der Silicationen in der wässrigen Lösung, zum zweiten von der chemischen Natur der ergänzenden Wirkstoffe und dem pH-Wert der ersten wässrigen Lösung und von der gewünschten Zeitdauer ab, in der der Vorkonditionierungsprozess in der dritten wässrigen Lösung ablaufen soll. Für die praktische Durchführbarkeit liegt die Dauer der Vorkonditionierung im Bereich von wenigen Sekunden bis maximal etwa 2 Stunden. Kürzere Reifungszeiten sind technisch schwer beherrschbar, während längere Reifungszeiten unhandlich große Reaktoren für den Reifungsprozess erfordern. Vorzugsweise führt man daher das erfindungsgemäße Verfahren in der Weise aus, dass die Konzentration der ergänzenden Wirkstoffe in der dritten wässrigen Lösung so gewählt wird, dass bei einer Konzentration von Silicat in der dritten Lösung, berechnet als SiO₂, im Bereich von 0,5 bis 7 Gew.-% bezogen auf die dritte Lösung die Zeitdauer, in der entweder die Trübung der dritten Lösung relativ zur Trübung unmittelbar nach dem Vereinigen der ersten und der zweiten Lösung um einen Faktor im Bereich von 1,5 bis 50 oder die Viskosität der Lösung relativ zur Viskosität unmittelbar nach dem Vereinigen der ersten und der zweiten Lösung um einen Faktor im Bereich von 1,5 bis 10 zunimmt, im Bereich von 1 Sekunde bis 2 Stunden, vorzugsweise im Bereich von 5 Sekunden bis 90 Minuten, insbesondere im Bereich von 10 Sekunden bis 60 Minuten liegt.

Wählt man die bereits genannten Phosphate als ergänzende Wirkstoffe, so verwendet man zur Herstellung der dritten wässrigen Lösung vorzugsweise eine solche Menge an erster wässriger Lösung, dass die Konzentration der Phosphate in der dritten Lösung, berechnet als PO₄³⁻, im Bereich von 0,5 bis 10 Gew.-% bezogen auf die dritte Lösung liegt. Dies führt bei den bereits genannten bevorzugten Konzentrationen der Silicate zu Vorkonditionierungszeiten im bevorzugten Zeitraum. Vorzugsweise enthält die dritte wässrige Lösung die Phosphate zumindest teilweise in Form von Orthophosphat. Besonders bevorzugt ist es, wie im Stand der Technik bekannt, zusätzlich zu Orthophosphat höher kondensierte Phosphate wie Diphosphate, Triphosphate und insbesondere Meta- und Polyphosphate zu verwenden. Außer Silicat und Phosphat enthält die dritte wässrige Lösung weiterhin bevorzugt Hydrogencarbonat oder Carbonat.

Die dritte wässrige Lösung kann man auf unterschiedliche Weise erhalten. Am zweckmäßigsten wird Wasser vorgelegt und in dieses Wasser die erste und die zweite wässrige Lösung eingemischt. Dieses Einmischen kann gleichzeitig oder nacheinander erfolgen. Vorzugsweise vermischt man zuerst die erste wässrige Lösung mit dem Wasser und gibt anschließend die zweite wässrige Lösung zu. Alternativ hierzu kann man entweder die erste oder die zweite wässrige Lösung zunächst mit Wasser verdünnen, bevor man die beiden Lösungen zur dritten Lösung vereinigt. Wie vorstehend ausgeführt, beeinflusst der Verdünnungsgrad die erforderliche Reifezeit. Man kann also entweder Wasser vorlegen und diesem Wasser zuerst die erste wässrige Lösung und danach die zweite wässrige Lösung zugeben. Oder man verdünnt die erste wässrige Lösung mit Wasser und gibt danach die zweite wässrige Lösung, die man ggf. mit Wasser verdünnt hat, zu. Dabei geht man vorzugsweise so vor, dass das Herstellen und Vermischen der dritten wässrigen Lösung kontinuierlich in einem Durchflussreaktor erfolgt. Dies ist für einen automatisierten Betrieb besonders günstig.

Dieser Durchflussreaktor kann in unterschiedlichen Ausgestaltungen vorliegen. Zum Beispiel kann der Durchflussreaktor mindestens 2 Kammern enthalten, die miteinander verbunden sind. In der ersten Kammer wird wie beschrieben die dritte wässrige Lösung durch kontinuierliches Zudosieren erster und zweiter wässriger Lösung und ggf. Wasser hergestellt und kontinuierlich in die zweite Kammer überführt. Dabei können sich ggf. weitere Kammern anschließen, in die jeweils die Lösung der Vorkammer überführt wird. Die dritte wässrige Lösung verbleibt im Mittel so lange in der zweiten und ggf. in den weiteren Kammern, bis die mittlere Aufenthaltsdauer der dritten wässrigen Lösung in dem Durchflussreaktor der oben definierten Reifungszeit entspricht. Dies kann durch das Volumen der Kammern und der pro Zeiteinheit hindurchfließenden Menge an Lösung eingestellt werden.

In einer weiteren Ausgestaltungsform enthält der Durchflussreaktor mindestens 3 Kammern. Dabei wird in der ersten Kammer die erste oder die zweite wässrige Lösung kontinuierlich mit Wasser verdünnt, diese verdünnte Lösung in die zweite Kammer überführt und in dieser zweiten Kammer die dritte wässrige Lösung dadurch hergestellt, dass man in diese Kammer diejenige wässrige Lösung zugibt, die nicht in die erste Kammer zugegeben wurde. Dabei kann die in die zweite Kammer zugegebene wässrige Lösung vorverdünnt worden sein. Vorzugsweise gibt man hierbei die Lösung der sonstigen Wirkstoffe, insbesondere eine Lösung von Phosphaten, in die erste Kammer und die Lösung der Silicate in die zweite Kammer. Die in der zweiten Kammer hergestellte dritte wässrige Lösung wird dann in die dritte Kammer und ggf. weitere Kammern überführt und verweilt dort unter Vermischen im Mittel so lange, bis die mittlere Aufenthaltsdauer der dritten wässrigen Lösung in dem Durchflussreaktor wiederum der vorstehend erläuterten Reifungsdauer entspricht. Diese Aufenthaltsdauer ist wiederum durch das Volumen der Kammern und der pro Zeiteinheit hindurchfließenden Lösungsmenge einstellbar.

In einer weiteren und besonders bevorzugten Ausführungsform stellt der Durchflussreaktor ein mit statischen oder dynamischen Mischeinrichtungen versehenes Rohr dar. Vorzugsweise fließt durch dieses Rohr Wasser, das die erste und die zweite wässrige Lösung zur dritten wässrigen Lösung verdünnt. In dieses wasserdurchflossene Rohr gibt man kontinuierlich gleichzeitig oder bevorzugt nacheinander (und in diesem Fall wieder bevorzugt zuerst die erste und dann die zweite wässrige Lösung) erste und zweite wässrige Lösung zu. Die dritte wässrige Lösung bildet sich hierbei in dem Durchflussrohr. Dabei stimmt man die Fließgeschwindigkeit des Wassers im Rohr und die Länge des Rohrs so aufeinander ab, dass die mittlere Aufenthaltsdauer der dritten wässrigen Lösung in dem Rohr der vorstehend erläuterten Reifungszeit entspricht. Wählt man diese Ausführungsform, ist es wiederum besonders bevorzugt, dass dieses Rohr innerhalb des Hauptrohrs des wasserführenden Metallsystems liegt. Unabhängig von der konkreten Ausführungsform des Durchlaufreaktors wird die dritte wässrige Lösung nach Ende der Reifungszeit in den Wasserstrom des wasserführenden Metallsystems eingespeist und hierbei auf Anwendungskonzentration verdünnt. Vorzugsweise geschieht dieses Einspeisen an einer Stelle starker Turbulenz, beispielsweise vor oder nach einer Pumpe oder direkt in den Pumpenraum. Oder man bringt in dem wasserführenden Metallsystem im Bereich der Einspeisungsstelle der dritten wässrigen Lösung turbulenzerzeugende Einbauten an.

Die Konzentration von Silicat in der dritten Lösung, berechnet als SiO₂, und die Menge an dritter wässriger Lösung, die den Wasserstrom des wasserführenden Metallsystems zugegeben wird, stimmt man vorzugsweise so aufeinander ab, dass die Konzentration von Silicat in dem Wasserstrom des wasserführenden Metallsystems, berechnet als SiO₂, im Bereich von 1 bis 15 mg/l liegt. Wählt man die ergänzenden Wirkstoffe aus den vorstehend angeführten Phosphaten aus, so stimmt man die Konzentration der Phosphate in der dritten wässrigen Lösung und die Menge an dritter wässriger Lösung, die man dem Wasserstrom des wasserführenden Metallsystems zugibt, vorzugsweise so aufeinander ab, dass die Konzentration von Phosphaten in dem Wasserstrom des wasserführenden Metallsystems, berechnet als PO₄, im Bereich von 0,1 bis 6,7 mg/l liegt.

In den folgenden Ausführungsbeispielen wird dargelegt, wie sich anhand ausgewählter Beispiele für die erste und die zweite wässrige Lösung die Reifungszeiten durch Messung der Änderung der Trübung bzw. der Viskosität in Vorversuchen bestimmen lassen.

Geräte: Magnetrührer, Bechergläser, Brookfield-Viskosimeter, Photometer Hach DR/2000 mit 2 cm Küvetten
Verwendete Lösungen: (Konzentrationsangaben in Gew.-%):
Vollentsalztes Wasser (= VE-Wasser);
Lösung 1: enthält 17,5 % Orthophosphat, zugegeben als
Mononatriumdihydrogenphosphat-Dihydrat, und 17,5 % Polyphosphat, zugegeben als Natriumpolyphosphat (jeweils berechnet als PO₄³⁻);
Lösung 2: enthält 25 % Silicat (berechnet als Si02), zugegeben als Natronwasserglas, und Natriumcarbonat

Es wurden Mischungsverhältnisse (Gewichtsverhältnis) Lösung 1 : Lösung 2 von 0,7 : 1 bis 3 : 1 angesetzt. Die Produktmischungen wurden teilweise mit VE-Wasser verdünnt angesetzt (siehe Tabellen).

Für die Versuche zur Bestimmung der Reifungsdauer wird in einem 600 ml Becherglas, hohe Form, Wasser vorgelegt, Lösung 1 zugeben und gerührt (wobei Vorlösung 1 erhalten wird). Weiterhin wird Lösung 2 in einem 50 ml Becherglas ausgewogen, gegebenenfalls mit Wasser verdünnt (wobei Vorlösung 2 erhalten wird) und gleichmäßig zügig unter Rühren in das 600 ml-Becherglas mit der Vorlösung 1 zugeben. Hierdurch entsteht Lösung 3.

Zur Viskositätsmessung nach Brookfield werden ca. 200 ml von Lösung 3 in ein 250 ml Becherglas, breite Form, geben und die Viskosität sofort sowie nach ausgewählten Zeitdauern gemessen. Der Rest der Lösung 3 wird langsam weitergerührt. Zur Trübungsmessung wird sofort nach Herstellung sowie nach ausgewählten Zeitdauern jeweils eine Probe entnommen, deren Lichtabsorption mit dem genannten Photometer in einer 2 cm Küvette gemessen wird. Die Messung von Viskosität und Trübung erfolgt je nach Kurvenverlauf alle 30 bis 60 Sekunden oder alle 5 bis 10 Minuten.

In den folgenden Tabellen sind die Versuche mit ihren Verdünnungen und Mischungsverhältnissen dargestellt:

| Beisp. Nr. | Vorlösung 1 | | Vorlösung 2 | |
|---|---|---|---|---|
| | Gramm Lösung 1 | Gramm VE-Wasser | Gramm Lösung 1 | Gramm VE-Wasser |
| 1 | 35 | 400 | 50 | 0 |
| 2 | 35 | 300 | 50 | 100 |
| 3 | 35 | 100 | 50 | 300 |
| 4 | 30 | 187 | 10 | 0 |
| 5 | 65 | 230 | 35 | 0 |
| 6 | 65 | 350 | 35 | 0 |
| 7 | 65 | 470 | 35 | 0 |
| 8 | 30 | 140 | 10 | 0 |

Hieraus ergeben sich folgende Gewichtsverhältnisse der unverdünnten Lösungen 1 und 2 sowie Verdünnungsgrade (Lösung 1 + Lösung 2) : Wasser in der Lösung : 3

| Beisp. Nr. | Gewichtsverhältnis Lösung 1 : Lösung 2 | Gewichtsverhältnis (Lösung 1 + Lösung 2) : Wasser |
|---|---|---|
| 1 | 0,7 : 1 | 1 : 4,7 |
| 2 | 0,7 : 1 | 1 : 4,7 |
| 3 | 0,7 : 1 | 1 : 4,7 |
| 4 | 3 : 1 | 1 : 4,7 |
| 5 | 1,9 : 1 | 1 : 2,3 |
| 6 | 1,9 : 1 | 1 : 3,5 |
| 7 | 1,9 : 1 | 1 : 4,7 |
| 8 | 3 : 1 | 1 : 3,5 |

Die Abbildungen zeigen den Verlauf von Trübung und Viskosität als nach der Herstellung der Lösung 3 als Funktion der Zeit (Minuten)

### Abbildungsunterschriften:

Abbildung 1:
   Verlauf der Viskosität für die Beispiele 1 und 3 als Funktion der Zeit.
Abbildung 2:
   Verlauf von Trübung (gestrichelte Kurve) und Viskosität (durchgezogenen Kurve) für Beispiele 3 und 4 als Funktion der Zeit.
Abbildung 3:
   Verlauf der Trübung für die Beispiele 3, 4 und 8 als Funktion der Zeit.

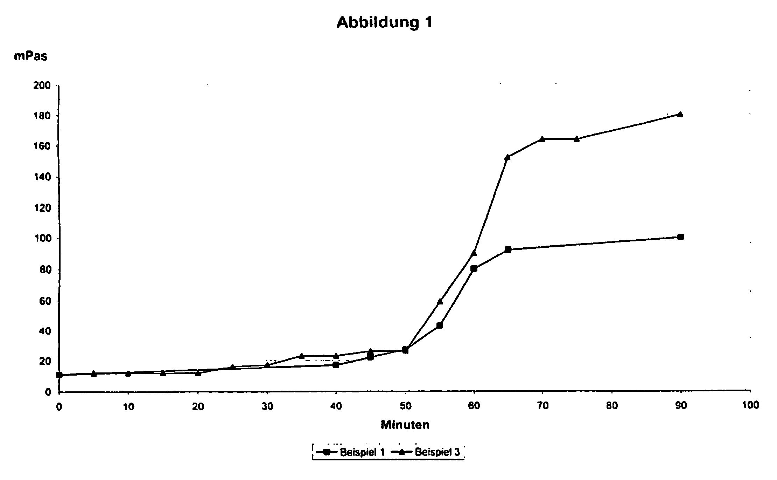

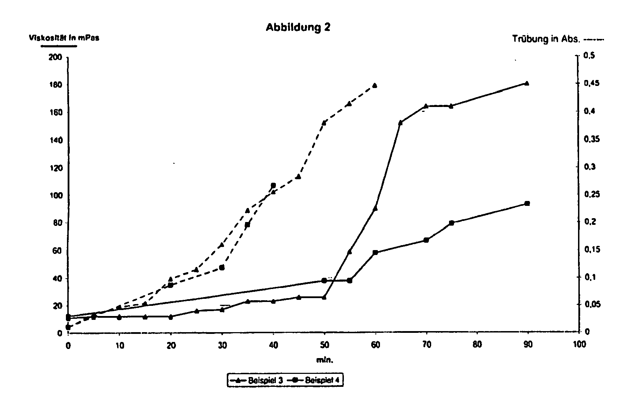

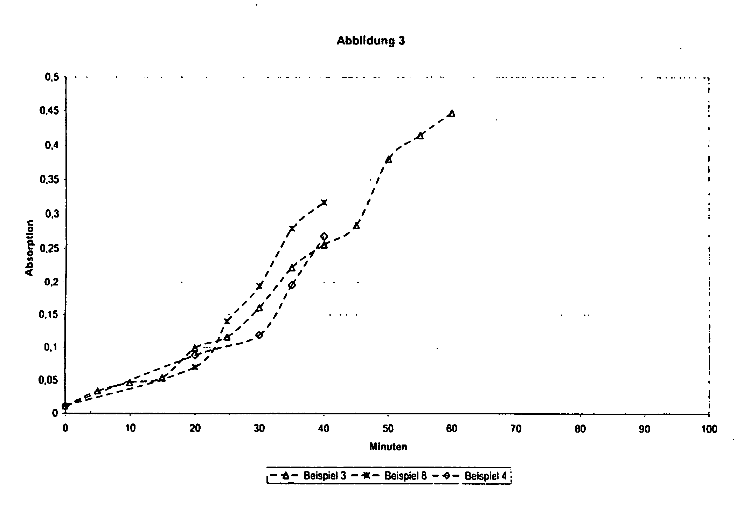

## Patentansprüche

1. Verfahren zur Korrosionschutzbehandlung wasserführender Metallsysteme durch Dosierung einer Kombination von Silicaten und Phosphaten in den Wasserstrom des wasserführenden Metallsystems, **dadurch gekennzeichnet, dass** es die folgenden Schritte umfasst:
- Vermischen einer ersten Lösung, welche die Phosphate enthält, mit einer zweiten Lösung, welche die Silicate enthält, zu einer dritten Lösung,
- wobei die Konzentration der Phosphate in der dritten Lösung, berechnet als PO₄, zwischen 0,5 und 10 Gew.-% und die Konzentration der Silicate, berechnet als SiO₂, zwischen 0,5 und 7 Gew.-% liegen, wobei in der dritten Lösung ein durch Anstieg der Trübung und/oder der Viskosität erkennbarer Reifungsprozess eintritt, und
- Unterbrechen des Reifungsprozesses durch Einspeisen der dritten Lösung in den Hauptwasserstrom des wasserführenden Metallsystems, nachdem entweder die Trübung relativ zur Trübung unmittelbar nach dem Vereinigen der beiden Lösungen um einen Faktor im Bereich von 1,5 bis 50 oder die Viskosität der Lösung relativ zur Viskosität unmittelbar nach dem Vereinigen der beiden Lösungen um einen Faktor von 1,5 bis 10 zugenommen hat.

2. Verfahren nach Anspruch 1, **dadurch gekennzeichnet, dass** das Phosphat in der ersten Lösung ausgewählt ist aus Phosphorsäure, primären, sekundären oder tertiären Alkalimetall-Monophosphaten,' . -Diphosphaten, -Oligophosphaten oder -Polyphosphaten.

3. Verfahren nach einem der Ansprüche 1 oder 2, **dadurch gekennzeichnet, dass** die erste wässrige Lösung neben Phosphaten noch Alkalimetall-Hydroxide, AlkalimetallCarbonate und/oder -Hydrogencarbonate enthält.

4. Verfahren nach einem der Ansprüche 1 bis 3, **dadurch gekennzeichnet, dass** die Konzentration der Phosphate in der dritten wässrigen Lösung so gewählt wird, dass bei einer Konzentration von Silicat in der dritten Lösung, berechnet als SiO₂, im Bereich von 0,5 bis 7 Gew.-% bezogen auf die dritte Lösung die Zeitdauer, in der entweder die Trübung der dritten Lösung relativ zur Trübung unmittelbar nach dem Vereinigen der ersten und der zweiten Lösung um einen Faktor im Bereich von 2 bis 50 oder die Viskosität der Lösung relativ zur Viskosität unmittelbar nach dem Vereinigen der ersten und der zweiten Lösung um einen Faktor im Bereich von 2 bis 10 zunimmt, im Bereich von 1 Sekunde bis 2 Stunden, vorzugsweise im Bereich von 5 Sekunden bis 90 Minuten, insbesondere im Bereich von 10 Sekunden bis 60 Minuten liegt.

5. Verfahren nach einem der Ansprüche 1 bis 4, **dadurch gekennzeichnet, dass** die dritte Lösung in der Weise erhalten wird, dass man Wasser vorlegt und in dieses Wasser die erste und die zweite wässrige Lösung einmischt und/oder dass man entweder die erste oder die zweite wässrige Lösung mit Wasser verdünnt, bevor man die beiden Lösungen zur dritten Lösung vereinigt.

6. Verfahren nach Anspruch 5, **dadurch gekennzeichnet, dass** man entweder Wasser vorlegt und diesem Wasser zuerst die erste wässrige Lösung und danach die zweite wässrige Lösung zugibt, oder dass man die erste wässrige Lösung mit Wasser verdünnt und danach die zweite wässrige Lösung, gegebenenfalls mit Wasser verdünnt, zugibt.

7. Verfahren nach einem der Ansprüche 1 bis 6, **dadurch gekennzeichnet, dass** Herstellen und Vermischen der dritten wässrigen Lösung kontinuierlich in einem Durchflussreaktor erfolgt.

8. Verfahren nach einem der Ansprüche 1 bis 7, **dadurch gekennzeichnet, dass** die Konzentration von Silicat in der dritten Lösung, berechnet als SiO₂, und die Menge an dritter wässriger Lösung, die dem Wasserstrom des wasserführenden Metallsystems zugegeben wird, so aufeinander abgestimmt sind, dass die Konzentration von Silicat in dem Wasserstrom des wasserführenden Metallsystems, berechnet als SiO₂, im Bereich von 1 bis 15 mg/l liegt.

9. Verfahren nach einem der Ansprüche 1 bis 8, **dadurch gekennzeichnet, dass** die Phosphate in der ersten wässrigen Lösung ausgewählt sind aus Phosphorsäure, primären, sekundären oder tertiären Alkalimetall-Monophosphaten, -Diphosphaten, -Oligophosphaten oder - Polyphosphaten und dass die Konzentration der Phosphate in der dritten Lösung, berechnet als PO₄, und die Menge an dritter wäßriger Lösung, die dem Wasserstrom des wasserführenden Metallsystems zugegeben wird, so aufeinander abgestimmt sind, dass die Konzentration von Phosphaten in dem Wasserstrom des wasserführenden Metallsystems berechnet als PO₄, im Bereich von 0,1 bis 6,7 mg/l liegt.

## Claims

1. A process for corrosion protection treatment of water conducting metallic systems by metering a combination of silicates and phosphates into the water flow of the water conducting metallic system, **characterised in that** it comprises the following steps:
- mixing a first solution containing the phosphates with a second solution containing the silicates to a third solution,
- wherein the concentration of the phosphates in the third solution (calculated as PO₄) is between 0.5 and 10 weight-% and the concentration of the silicates (calculated as SiO₂) is between 0.5 and 7 weight-% and wherein a maturation process occurs in the third solution that is identifiable by an increase in the turbidity and/or viscosity, and
- interrupting the maturation process by feeding the third solution into the main water flow of the water conducting metallic system after either the turbidity has increased by a factor in the range of 1.5 to 50 relative to the turbidity immediately after combining the two solutions or the viscosity of the solution has increased by a factor of 1.5 to 10 relative to the viscosity immediately after combining the two solutions.

2. Process according to claim 1, **characterised in that** the phosphate in the first solution is selected from phosphoric acid, primary, secondary or tertiary alkali metal monophosphates, alkali metal diphosphates, alkali metal oligophosphates or alkali metal polyphosphates.

3. Process according to one of claims 1 or 2, **characterised in that** the first aqueous solution in addition to phosphates contains alkali metal hydroxides, alkali metal carbonates and/or alkali metal hydrogencarbonates.

4. Process according to one of claims 1 to 3, **characterised in that** the concentration of the phosphates in the third aqueous solution is chosen so that, at a concentration of silicate in the third solution (calculated as SiO₂) in the range of 0.5-7 weight-% with reference to the third solution, the period for either increase of the turbidity of the third solution by a factor in the range of 2-50 relative to the turbidity immediately after combining the first and second solution or increase of the viscosity of the solution by a factor in the range of 2-10 relative to the viscosity immediately after combining the first and second solution is in the range of 1 second to 2 hours, preferably in the range of 5 seconds to 90 minutes, in particular in the range of 10 seconds to 60 minutes.

5. Process according to one of claims 1 to 4, **characterised in that** the third solution is obtained by starting with water and blending the first and second aqueous solutions into this water and/or by diluting either the first or the second aqueous solution with water before combining both solutions to the third solution.

6. Process according to claim 5, **characterised by** either starting with water and first blending the first aqueous solution and then the second aqueous solution into this water, or diluting the first aqueous solution with water and then adding the second aqueous solution, optionally diluted with water.

7. Process according to one of claims 1 to 6, **characterised in that** the third aqueous solution is continuously created and mixed in a flow reactor.

8. Process according to one of claims 1 to 7, **characterised in that** the concentration of silicate in the third solution (calculated as SiO₂) and the quantity of the third aqueous solution that is added to the water flow of the water conducting metallic system are adjusted with one another so that the concentration of silicate in the water flow of the water conducting metallic system (calculated as SiO₂) is in the range of 1-15 mg/l.

9. Process according to one of claims 1 to 8, **characterised in that** the phosphates in the first aqueous solution are selected from phosphoric acid, primary, secondary or tertiary alkali metal monophosphates, alkali metal diphosphates, alkali metal oligophosphates or alkali metal polyphosphates and that the concentration of the phosphates in the third solution (calculated as PO₄) and the quantity of the third aqueous solution that is added to the water flow of the water conducting metallic system are adjusted with one another so that the concentration of phosphates in the water flow of the water conducting metallic system (calculated as PO₄) is in the range of 0.1-6.7 mg/l.

## Revendications

1. Procédé de traitement anti-corrosion pour des systèmes métalliques aquifères par dosage d'une combinaison de silicates et de phosphates dans le courant d'eau du système métallique aquifère, **caractérisé en ce qu'**il comprend les étapes suivantes :
- mélanger une première solution qui contient les phosphates à une deuxième solution qui contient les silicates pour obtenir une troisième solution,
- la concentration en phosphates dans la troisième solution, calculée comme PO₄, se trouvant entre 0,5 et 10 % en poids et la concentration en silicates, calculée comme SiO₂, entre 0,5 et 7 % en poids, un processus de maturation reconnaissable à l'augmentation de la turbidité et/ou de la viscosité ayant alors lieu dans la troisième solution, et
- interrompre le processus de maturation en introduisant la troisième solution dans le courant principal d'eau du système métallique aquifère après que soit la turbidité par rapport à la turbidité juste après que les deux solutions ont été combinées a augmenté d'un facteur dans la plage de 1,5 à 50, soit la viscosité de la solution par rapport à la viscosité juste après que les deux solutions ont été combinées a augmenté d'un facteur de 1,5 à 10.

2. Procédé selon la revendication 1, **caractérisé en ce que** le phosphate dans la première solution est choisi parmi les acides phosphoriques, les monophosphates, diphosphates, oligophosphates ou polyphosphates primaires, secondaires ou tertiaires de métaux alcalins.

3. Procédé selon l'une des revendications 1 ou 2, **caractérisé en ce que**, outre des phosphates, la première solution aqueuse contient aussi des hydroxydes de métaux alcalins, des carbonates et/ou des hydrogénocarbonates de métaux alcalins.

4. Procédé selon l'une des revendications 1 à 3, **caractérisé en ce que** la concentration des phosphates dans la troisième solution aqueuse est choisie de telle manière que, pour une concentration en silicate dans la troisième solution, calculée comme SiO₂, dans la plage de 0,5 à 7 % en poids par rapport à la troisième solution, la durée que met soit la turbidité de la troisième solution par rapport à la turbidité juste après que la première et la deuxième solution ont été combinées à augmenter d'un facteur dans la plage de 2 à 50, soit la viscosité de la solution par rapport à la viscosité juste après que la première et la deuxième solution ont été combinées à augmenter d'un facteur de 2 à 10 se situe dans la plage de 1 seconde à 2 heures, de préférence dans la plage de 5 secondes à 90 minutes, en particulier dans la plage de 10 secondes à 60 minutes.

5. Procédé selon l'une des revendications 1 à 4, **caractérisé en ce que** la troisième solution aqueuse est obtenue **en ce qu'**on dispose d'eau et qu'on mélange à cette eau la première et la deuxième solution aqueuse et/ou qu'on dilue à l'eau soit la première soit la deuxième solution aqueuse avant de combiner les deux solutions pour obtenir la troisième solution.

6. Procédé selon la revendication 5, **caractérisé en ce qu'**on dispose d'eau et qu'on ajoute à cette eau d'abord la première solution aqueuse et ensuite la deuxième solution aqueuse ou qu'on dilue à l'eau la première solution aqueuse et qu'on ajoute ensuite la deuxième solution aqueuse, éventuellement diluée à l'eau.

7. Procédé selon l'une des revendications 1 à 6, **caractérisé en ce que** la production et le mélange de la troisième solution a lieu en continu dans un réacteur en écoulement.

8. Procédé selon l'une des revendications 1 à 7, **caractérisé en ce que** la concentration en silicate dans la troisième solution, calculée comme SiO₂, et la quantité de troisième solution aqueuse qui est ajoutée au courant d'eau du système métallique aquifère sont déterminées l'une par rapport à l'autre de telle manière que la concentration en silicate dans le courant d'eau du système métallique aquifère, calculée comme SiO₂, se trouve dans la plage de 1 à 15 mg/l.

9. Procédé selon l'une des revendications 1 à 8, **caractérisé en ce que** les phosphates dans la première solution aqueuse sont choisis parmi les acides phosphoriques, les monophosphates, diphosphates, oligophosphates ou polyphosphates primaires, secondaires ou tertiaires de métaux alcalins et que la concentration des phosphates dans la troisième solution, calculée comme PO₄, et la quantité de troisième solution aqueuse qui est ajoutée au courant d'eau du système métallique aquifère sont déterminées l'une par rapport à l'autre de telle manière que la concentration en phosphates dans le courant d'eau du système métallique aquifère, calculée comme PO₄, se trouve dans la plage de 0,1 à 6,7 mg/l.
